(19) Europäisches Patentamt
European Patent Office
Office européen des brevets

(11) Publication number: **0 020 125**
**A1**

(12) # EUROPEAN PATENT APPLICATION

(21) Application number: **80301752.4**

(22) Date of filing: **28.05.80**

(51) Int. Cl.³: **C 09 D 3/80,** C 08 J 7/04, B 05 D 7/02

(30) Priority: **30.05.79 US 43959**

(43) Date of publication of application: **10.12.80 Bulletin 80/25**

(84) Designated Contracting States: **AT BE CH DE FR GB IT LI NL SE**

(71) Applicant: **Rohm and Haas Company, Independence Mall West, Philadelphia, Pennsylvania 19105 (US)**

(72) Inventor: **Kielbania Jr., Andrew John, 123 Peggy Lane, Chalfont Pennsylvania 18914 (US)**

(74) Representative: **Angell, David Whilton et al, Rohm and Haas Company Patent Department Chesterfield House Barter Street, London WC1A 2TP (GB)**

(54) **Polyolefins having addition polymer adherent thereto, their preparation and articles comprising them.**

(57) Polyolefins, particularly polypropylene, have adherent thereto vinyl addition polymer of monomer comprising at least one monomer of the formula:

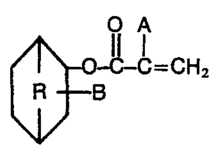

wherein A is H or methyl, B is H or methyl and R is $CH_2$, $CHCH_3$ or $C(CH_3)_2$;
the polymer having a total surface energy between about 22 and about 42 dynes per cm, said energy having a non-polar dispersive component between about 20 and about 38 dynes per cm and a polar component up to about 15 dynes per cm, the polar component being not more than 38% of the total surface energy.

The polyolefin may be untreated to enhance bonding of polymer thereto. The adherent polymer may be used alone or in admixture with other polymer and may serve as a coating, tie coat, adhesive or binder. Polyolefins bearing the polymer may be in the form of nonwoven fabrics, laminates or flocked fabrics.

EP 0 020 125 A1

POLYOLEFINS HAVING ADDITION POLYMER ADHERENT THERETO, THEIR PREPARATION AND ARTICLES COMPRISING THEM.

The invention is concerned with polyolefins having polymer adherent thereto. More particularly the invention embraces articles comprising polymers bonded to polyolefin surfaces, particularly to untreated polyolefin surfaces and most particularly to the difficult to wet untreated polypropylene surfaces. These polymers comprise mer units having comparatively non-polar and non-polarizable groups, other than small groups, extending from the polymer backbone. In various embodiments the adherent vinyl polymers, or bonded polymers, form adhesive coats, tiecoats, topcoats or as components of these. Articles exemplifying embodiments of this invention include nonwoven fabrics, woven fabrics and flocked fabrics, all comprising polyolefins and the adherent polymers; laminates of polyolefins and other materials; and decorated polyolefins in which the pigment, dye or other decoration is bonded by the adherent polymer.

Polyolefins, particularly polypropylene, have inert surfaces to which other materials cannot be readily bonded. Various surface treatments such as flame oxidation, corona discharge and chemical etching have been used to activate these surfaces with some measure of success.

It is known to employ certain, relatively expensive, chlorinated polymers as primers to enhance the bonding of materials to untreated polyolefin surfaces. It may be speculated that these polymers are actually a form of

chemical etching by means of their slow release of strong acid or strongly oxidizing materials. Chlorinated mixtures of a hydrocarbon resin and polyethylene are taught for use as primers and paint and ink additives for improving adhesion of coatings to polyolefin, by Etter in US patent 4,070,421. Chlorinating carboxyl-group-containing polyolefins to form primer coatings for untreated polyolefin substrates is taught in US patent 3,579,485. Menikheim et al., in US patent 3,380,844 teach the coating of polyolefin film by a polymer of vinylidene chloride, a (meth)acrylate ester and (meth)acrylic or itaconic acid. The polymers are recited as having non-strippable adhesion to polyolefin substrates. Acrylic esters having alkyl groups containing more than two carbon atoms were found to be not entirely satisfactory in these polymers.

Polymers other than chlorinated polymers have also been adhered to polyolefins. Agouri et al. teach a process for chemical modification of polyolefins by grafting polar monomers onto the polyolefin by means of a free radical generating material, in US patent 4,080,405, to produce a polyolefin surface having improved wettability. MacArthur, in US patent 3,394,029, teaches the coating of polyolefin surfaces by solution polymers of certain terpene acrylates and N-terpene acrylamides for improved adhesion of conventional lacquer topcoats. Chancler et al., in US patent 4,014,645, teach the enhancement of dye receptivity of polyolefin materials used in fabric manufacture by coating the polyolefin with a self-curing polymeric binder containing a quaternary ammonium salt. Emmons et al., in US patent 4,097,677, disclose certain radiation curable coatings, useful to coat some polyolefins; the coatings comprising monomeric unsaturated esters of glycol monodicyclopentenyl ethers. In British patent 1,177,199, there is disclosed nonwoven webs containing a major amount of polypropylene fibers bonded with a binder comprising

vinyl acetate, ethylene and an unsaturated N-methylol amide or an alkyl ether thereof. It is pointed out that "as is well known, it is extraordinarily difficult to bond polypropylene to itself or to other materials." (page 1, line 53). Robinson et al., in US patent 3,241,662, teach the preparation of a roll of biaxially oriented polypropylene film having an activated surface and adherent to the activated surface a pressure sensitive adhesive which does not adhere to the untreated surface. The polymer is a polymer of about 55 to 95% of an alkyl ester of acrylic or methacrylic acid with the alkyl group preferably having 6 to 12 carbon atoms, up to 12% of an unsaturated carboxylic acid or unsaturated aliphatic amide and various other comonomers. Cantor et al., in US patent 3,258,443, describe a latex which may be used to deposit a pressure-sensitive adhesive on polyethylene and polypropylene. The latex is prepared from 1 to 45% vinyl acetate, 50 to 98% of an alkyl acrylate having an alkyl group of between 4 and 10 carbon atoms (several acyclic alkyl groups are named) and 1 to 5%of an unsaturated carboxylic acid. The alkyl group containing 4 to 10 carbon atoms preferably contains at least 6 straight chain carbon atoms and most preferably is the 2-ethylhexyl group. James et al., in US patent 3,519,531, disclose certain copolymers of ethylene and vinyl esters of alkenolic acids and alkyl esters of acrylic or substituted acrylic acid, for coating polypropylene film. Taft et al., in US patent 3,887,738, teach hot melt compositions comprising a copolymer of ethylene and vinyl acetate and/or alkyl acrylate useful as an adhesive for the back sizing of tufted carpets which may comprise polypropylene backing materials. Two patents to Baatz et al., US patents 3,931,087 and 4,012,560 teach the use of copolymers of a sulfonic acid and esters of acrylic or methacrylic acids as pressure sensitive adhesives which are adherent to a number of surfaces including polyethylene and polypropylene.

Peterson, in U.S. Patent 3,524,795, teaches layered barrier packaging films employing polyolefin outer layers and a gas barrier inner layer bonded together by adhesives such as chlorinated polyethylene, a copolymer of ethylene and vinyl acetate, and copolymers of ethylene and certain lower acrylates.

We have now found that certain polymers are surprisingly adherent to polyolefin surfaces, especially untreated polyolefin surfaces and more particularly untreated polypropylene surfaces. Untreated polyolefins, (i.e. those whose surface has not been treated to enhance bonding thereto), particularly untreated polypropylene, have not been commercially employed to the extent desired because of the difficulty in finding adhesive compositions suitable for coating or adhering other materials to such polyolefins. In this invention certain vinyl addition latex polymers may give adhesion to untreated polypropylene which is unexpectedly superior to that of corresponding solution polymers. The latex systems are also easier to handle during processing steps and far more desirable because of the absence of solvents. Solvents require attention to pollution control which is becoming more costly.

According to the invention there is provided a polyolefin substrate having adherent thereto final addition polymer more particularly described below. The polyolefin substrate is preferably untreated and more preferably untreated polypropylene. The substrate may be in any of the various forms in which the polyolefins are commonly used such as bulk articles, thick sheets, thin films, slit films, woven slit films, fibers, cut fibers, yarn and the like. The vinyl addition polymer is a polymer of monomers, comprising

preferably, at least 5% by weight of, at least one primary monomer of the formula:

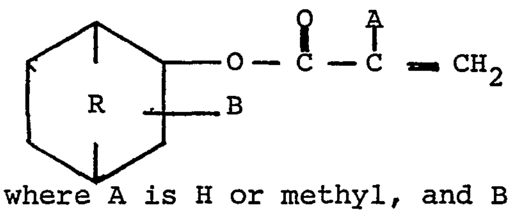

where A is H or methyl, and B is H or methyl, and R is $CH_2$, $CH(CH_3)$ or $C(CH_3)_2$.

The polymer has surface energy properties such as to form a stable bond with the polyolefin substrate. In more quantitative terms, it is preferable that the total surface energy of the polymer be between about 22 and 42 dynes/centimeter; said energy having a non-polar dispersive component between about 20 and about 38 dynes/centimeter and a polar component up to about 15 dynes/centimeter with said polar component being not over about 38% of the total surface energy. It is further preferred that the polymer have an average solubility more than 0.25 gm. per 100 ml. in the low solubility parameter solvents isooctane, n-pentane, 1-hexene, diisobutylene, and cyclohexane. Preferably the polymer is a latex polymer.

This invention embraces articles comprising a polyolefin and the adherent vinyl addition polymer. The polyolefin may be a rigid substrate, such as a printed or decorated polyolefin in which the vinyl addition polymer is employed in the paint or decorative coating, or as a tiecoat between the decoration or coat and the polyolefin, or as an adhesive such as for bonding a textile fabric to the polyolefin. The coating may have other purposes in addition to or other than decoration. Examples are polyurethane or polyester foams or polyvinyl chloride films adhered to the polyolefin. Such other purposes include protection of the polyolefin, furnishing an article

with additional properties such as cushioning, barrier or non-skid properties etc. Other embodiments include flock coated polyolefin. Among the uses of the vinyl addition polymers on flexible polyolefin surfaces are laminations, including lamination of textile fabrics and flocked materials and thin films such as polyvinyl chloride film. A further example of the use of the vinyl addition polymer is to serve as a dyeable coating for polypropylene such as polypropylene fabric, fabric containing polypropylene flock and polypropylene plastic materials. The adherent vinyl addition polymers, alternatively described as vinyl addition polymeric adhesives, range from materials having a low glass transition temperature (Tg), and soft and sticky, to those with a comparatively high Tg and hard and tough or brittle as desired and obtainable by compositional and molecular weight variation.

This invention also relates to processes for preparing the invented articles.

The polyolefins which are the substrates of this invention comprise in particular olefin polymers, especially polymers of olefins containing 2 to 8, and preferably 2 to 5 and most preferably 3 carbon atoms. The polyolefins include, without being limited thereto, polyethylene, polypropylene, polybutenes, polypentenes, and copolymers of these with small amounts of other monomers with which they are copolymerizable. Included are such copolymers containing at least 85% by weight of olefin units, as defined by the Textile Fiber Products Identification Act (Public Law 85-897). Such polyolefins may be in the form of fibers, granules, films, woven forms and nonwoven forms, such as woven slit film and spun bonded

polyolefins, polyolefin tape, sheet and block. The polyolefins may be heat set or molded forms. Included are oriented, including biaxially oriented, polyolefin films especially oriented polypropylene films. Of greatest importance is the group of polyolefins known as "untreated polyolefins" and particularly "untreated polypropylene". As has been recited above, untreated polyolefin surfaces are difficult to bond as well as to wet. The difficulty is often ascribed to the non-polar and hydrophobic nature of the purely hydrocarbon surface present on these materials. Polypropylene has been singled out as being especially difficult and it has been suggested that the reason for the particular difficulty in bonding to untreated polypropylene is that the surface consists essentially of methyl groups. The vinyl addition polymers of this invention adhere to these difficult to wet and difficult to bond surfaces.

The preferred primary monomers of this invention are isobornyl acrylate and/or isobornyl methacrylate particularly the harder isobornyl methacrylate.

In one embodiment the polymer comprises less than 20% by weight of primary monomer units. The, up to 95% by weight, comonomers in the adherent polymer may be any of the well known unsaturated addition polymerizable vinyl monomers.

The adherent polymer may be prepared by any of the well known methods of free radical emulsion or latex polymerization. It is known to control the molecular weight of the produced polymer by means such as polymerization temperature, initiator concentration and mode of addition, and chain transfer agent concentration and mode of addition. For good flow of the neat polymer and low extensibility, i.e. little "leggyness" of the adhesive polymer comparatively low molecular

weight material, such as up to 300,000 is preferred. For greater toughness emulsion polymerization, used in the absence of molecular weight limiting components, yields molecular weights above 300,000 with values of two million being achievable. Still higher molecular weights and insolubility of the polymer are obtained by employing crosslinking monomers among the monomers in the polymer. Crosslinking normally results in improved resistance to solvents, such as drycleaning solvents, in improved resistance to chemical attack, such as by aqueous detergents in washing, and in improved thermal stability and in resistance to polymer creep. Addition crosslinking monomers are polyethylenically unsaturated copolymerizable monomers, such as divinylbenzene, diallyl maleate, diallylphthalate, ethylene glycol diacrylate or dimethacrylate, glycerol triacrylate and so forth.

A more preferred way of producing crosslinked polymers in this invention is to prepare the polymer in a crosslinkable form and then in a separate step, ordinarily after application to the substrate, achieve crosslinking by a subsequent chemical reaction such as a further addition reaction or a condensation reaction. The further reaction can occur between functional groups already present in the mer units of the polymer chain or by reaction of functional groups on the polymer chain with an external crosslinker. The crosslinking reaction may be initiated by free radical initiators, by thermal activation, by radiation, by loss of water or other small molecules as in a condensation reaction, by pickup of water from the atmosphere, etc. The various reactions may be accelerated by heat or radiant energy such as ultraviolet radiation or electron beam curing as is well known in the art.

A wide variety of functional groups is useful for producing crosslinking particularly with an external crosslinking agent. Such groups may be present at levels up to about 20% although 0.02% to 10% is preferred and 0.1% to 3% is most preferred. Mer units comprising pendant amido groups, including alkylamido, alkoxyamido and alkoxyalkylamido (both mono- and di- in each case) are useful. Examples of such groups are acrylamido, methacrylamido, methoxymethylacrylamido, butoxymethylmethacrylamido, methylacrylamido and so forth. These groups are crosslinkable with external aminoplasts as well as internally with each other employing well known aminoplast chemistry. The

reactions are normally enhanced by the use of acid catalysis which may include catalysis by acid groups on the polymer itself. The groups may be crosslinked by epoxy crosslinkers, normally used as external crosslinkers and again acid catalysis may be employed. Polycarboxylic molecules and polyhydroxyl molecules, small molecules or polymeric molecules, are also useful as crosslinkers for the amido groups and are also catalyzed by acids.

The hydroxyl groups, carboxyl groups or epoxy groups may alternatively be on the polymer and be crosslinked by other mer units on the polymer or external crosslinking agents. Mercapto groups may be substituted for hydroxyl groups in the crosslinking systems. Preferably, polymer hydroxyl groups are crosslinked by external aminoplasts using acid catalysis. Polymer carboxyl groups are readily crosslinked by external epoxy groups and in this case base catalysis, such as by the use of simple amines, for example triethanol amine or benzyl dimethylamine, can be used. Epoxy groups in the polymer are preferably crosslinked by polycarboxylic compounds and catalyzed either by acids or bases which may be either internal (in the polymer) or external. An example of an internal base is a mer unit derivable from an amine monomer such as dimethylaminoethylmethacrylate or a quaternary ammonium monomer. More specifically the coating may be thermosetting, i.e., be subject to latent crosslinking. Such polymers are made with monomers which contain reactive groups capable of reacting with themselves or with other groups present in the polymer chain to impart crosslinking during heating or fusion of the coating. Where addition polymers are involved, monomers which are suitable for this function include certain acrylics having crosslinkable functionality exemplified by the

following: acrylic acid; methacrylic acid; acrylamide; methacrylamide; epoxyalkyl acrylates or methacrylates, e.g., glycidyl methacrylate; monoacrylic acid esters of glycols; hydroxyalkyl acrylates or methacrylates, isocyanatoalkyl acrylates and aminoalkyl acrylates or methacrylates, as well as other compounds described below.

Examples of the latent crosslinking reactions which are possible using heat and/or catalysis are:

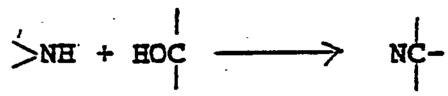

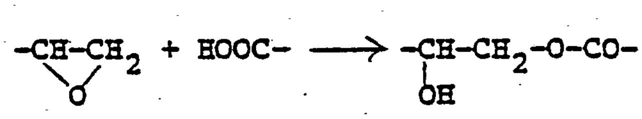

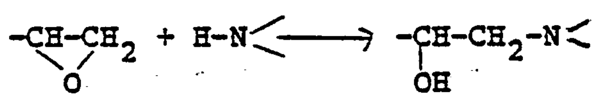

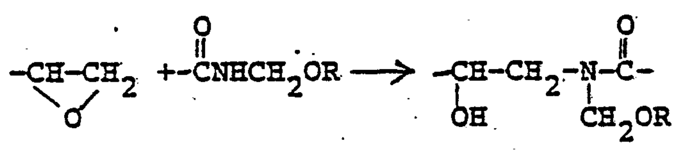

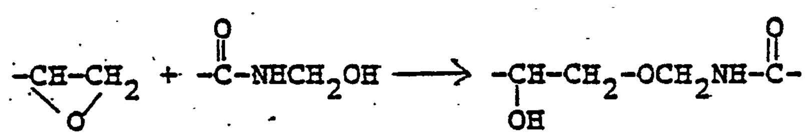

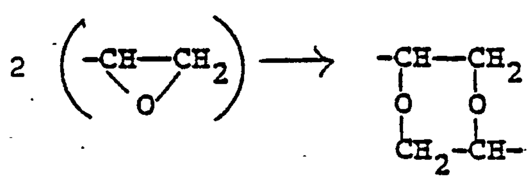

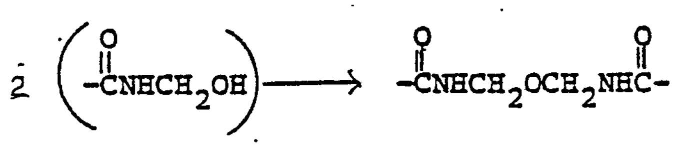

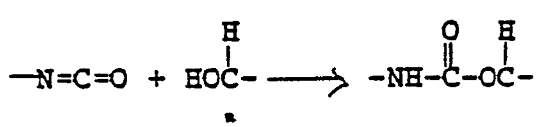

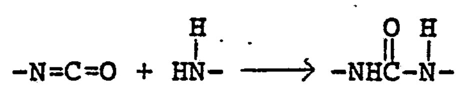

Addition polymerizable unsaturated monomers containing such groups are well known in the art. Functional monomers of use are disclosed in U.S. patent nos. 3,446,777 to W. D. Emmons, 3,150,118 to D. H. Clemens and 3,266,930 to W. D. Emmons and E. Hankins Owens, all incorporated herein by reference.

A preferred crosslinking system employs the unsaturated quaternary ammonium monomers of S.N. Lewis et al. taught in U.S. patent 3,678,098, incorporated herein by reference. A particular advantage of the Lewis et al. crosslinking system is the ability to crosslink at temperatures below the distortion temperature of the polyolefin. Another advantage of the Lewis et al. crosslinking system is, due to its being a quaternary ammonium system and thus cationic, that it is particularly dyeable by dyes such as acid dyes, metallized dyes and direct dyes. Other thermosetting systems can be used, such as the aminoplast-modified alkyds described in U.S. patent no. 2,648,642 to Spencer, and the aminoplast-modified acrylics described in U.S. patent nos. 2,978,433 to Hurwitz, 3,082,184 to Falgiatore et al., 3,183,282 to Hurwitz, and 3,235,622 to Clemens et al. Formulation with external crosslinkers has long been conventional in the art thus the procedures and ratios are well known.

Another preferred crosslinking system employs antoxidizable groups such as dicyclopentenyl groups. Such groups can be incorporated into the polymer by means of monomers such as dicyclopentenyl oxyacrylate or methacrylate and DCPOEMA and DCPOEA identified hereinbelow.

When less than 25%, for example about 5% and about 25%, by weight, of the primary monomers are employed, it is preferred that

the average solubility parameter, averaged by weight percent, of the supplementary monomers be 8.8 or less; in the 25 to 50% range of the primary monomers it is preferred that the supplementary monomers have an average solubility parameter of less than 9.2. When greater than about 50% of the primary monomers is utilized in the copolymer any other copolymerizable monomers are employed. Solubility parameters of monomers and other molecules are described in detail in "Polymer Handbook", Second Edition, J. Brandrup and E. H. Immergut, Editors (John Wiley & Sons, New York 1975) Section IV Part 15 Entitled "Solubility Parameter Values" by H. Burrell, pages IV-337 to 359, herein incorporated by reference. Burrell defines solubility parameter, describes how it is determined and calculated, and gives tables of the solubility parameter as well as further references to the scientific literature on this property. In the Burrell chapter there is also taught methods of calculating the solubility parameter from structural formulas utilizing tables of group molar attraction constants, see page IV-339. The table of Small is preferred. Typical solubility parameter values are given in the following table.

| Monomer | Solubility Parameter |
|---|---|
| α-methyl styrene | 8.5 |
| 2-ethylhexyl acrylate | 7.8 |
| ethyl methacrylate | 8.3 |
| ethyl acrylate | 8.8 |
| isobutyl acrylate | 8.5 |
| butyl acrylate | 8.6[1] |
| butyl methacrylate | 8.2 |
| vinyl ethyl ether | 7.8[1] |
| vinyl propyl ether | 7.9[1] |
| vinyl butyl ether | 7.9[1] |

| Monomer | Solubility Parameter |
|---|---|
| vinyl 2-ethylhexanoate | 8.1[1] |
| vinyl 2-ethylhexy ether | 8.0[1] |
| vinyl isobutyl ether | 7.9[1] |
| vinyl methyl ether | 7.0[1] |
| vinyl 2,6,8-trimethyl-4-nonyl ether | 7.5[1] |
| vinyl butyl carbitol | 8.7[1] |
| vinyl butyrate | 8.7[1] |
| hexyl acrylate | 8.7[1] |
| vinyl chloride | 7.8[1] |
| vinyl acetate | 9.0 |
| vinyl toluene | 9.1 |
| methyl acrylate | 8.9 |
| methyl methacrylate | 9.2[1] |
| vinyl propionate | 8.9[1] |
| dibutyl maleate | 9.0 |
| allyl acetate | 9.2 |
| vinyl ethyl carbitol | 8.9[1] |
| vinyl methyl cellosolve | 9.0 |
| acrolein | 9.8 |
| styrene | 9.3 |
| maleic anhydride | 13.6 |
| diethyl maleate | 9.9 |
| acrylic acid | 12.9[1] |
| acrylonitrile | 10.6[1] |
| vinyl carbitol | 11.0[1] |
| vinyl crotonate | 9.4[1] |

[1] Values from K. L. Hoy Journal of Paint Technology, Vol 42 pp 76-118 (1970) others are from H. Burrell, supra.

The term "vinyl monomer" as used herein means a monomer comprising at least one of the groups vinylidene, vinyl or vinylene. The preparation of these polymers is taught in several of the examples as well as in standard texts on the subject such as "Polymer Processes" by Schildknecht, Interscience, New York (1956) and "Emulsion Polymerization" by Blackley, Wiley, New York (1975). Mixtures of the vinyl

polymers prepared by different methods or by the same method are also useful in this invention.

In addition to the surface energetics required for good adhesion to polyolefins, for specific uses a given hardness or softing temperature is desirable. The desired hardness or softing temperature is obtained by copolymerizing harder or softer monomers with the primary vinyl addition monomers to achieve the desired hardness or softing range. This is controlled by the glass transition temperature, Tg, of the copolymer. To increase hardness and to raise the softening temperature comonomers are used whose homopolymer Tg is greater than that of theprimary vinyl monomer. Tg is a conventional criterion of polymer hardness described in "Principles of Polymer Chemistry" by Flory, see especially pages 56 and 57, Cornell University Press (1953). Lists of Tg of high molecular weight homopolymers are widely available such as in "Polymer Handbook", supra, Section III. Measurements of Tg may be made on polymers samples. Tg may be calculated for copolymers as described by Fox, Bull. Am. Physics Soc. 1,3,p. 123 (1956).

To form a stable bond with a polyolefin substrate the adherent vinyl addition polymer must have the appropriate surface energy properties. It is believed, these properties are necessary to form an intimate bond between the polymer and the polyolefin as well as to prevent the intrusion or to promote the elimination of foreign liquids and gases from the microscopic and submicroscopic interstices on the surface of the polyolefin. Such foreign material would be a barrier to the intimate contact between polymer and polyolefin. Although we do not wish to be bound by any specific theory of operation of adhesive forces, it appears that high adhesion is obtained by both high intimacy of

contact, due to exclusion of air or foreign liquids from the interface, and high bonding forces across the interface between the polyolefin and the adherent vinyl addition polymer. These effects are achieved in a balanced manner when the surface energy properties of the vinyl addition polymer are appropriate. The surface energy properties of the adherent vinyl addition polymer are determined by placing a drop of water and separately a drop of methylene iodide on a plane surface of the adherent polymer and determining the angle of contact between the liquid, water in the one case and methylene iodide in the other, and the polymer at the edge of the drop. From these two data there is calculated, the total surface energy of the adherent polymer and the non-polar dispersive component and polar component of this energy; these being the only two components the sum is the total surface energy. It is preferred that the total surface energy be between about 22 and about 42 dynes per centimeter, having a non-polar dispersive component between about 20 and about 38 dynes per centimeter and a polar component up to about 15 dynes per centimeter. In general it is preferred that the polar component be not over about 38% of the total surface energy. An even more preferable range for the total surface energy is from about 26 to about 39 dynes per centimeter with a non-polar component being between about 22 and about 36 dynes per centimeter and the polar component being up to about 14 dynes per centimeter.

Additionally it is found desirable that the solubility of the adherent vinyl addition polymer in certain low solubility parameter solvents, i.e., isooctane, n-pentane, 1-hexene, diisobutylene and cyclohexane, average 0.25 gm per 100 ml or greater. It is preferable that the average solubility in these solvents be over 0.35 gm/100 ml and even more preferable that it be over 0.50 gm/100 ml.

A stable bond between the polyolefin and the adherent

vinyl addition polymer is demonstrable by a peel adhesion test. Using the 180° adhesion peel strength tests described below, (employing a 30 cm per minute crosshead speed), with untreated polypropylene sheet as the substrate, a value greater than 17.8 $kgm^{-1}$ (one lb. per inch) may indicate a stable bond. Preferably the bond stability is such that the 180° peel strength (at 30 cm per minute) is greater than 35.7 $kgm^{-1}$ (two lbs. per inch) and most preferably greater than 71.4 $kgm^{-1}$ (four lbs. per inch) or even 89.3 $kgm^{-1}$ (five lbs. per inch). Ordinarily the test is performed at room temperature but in the case of a polymer having a Tg above zero degrees C the 180° peel strength measurement is made at a temperature 20 degrees C above the Tg. When a cohesive failure is observed the temperature at which the test is performed is lowered until an adhesive failure to the polypropylene is observed or the Tg of the polymer is reached. Measurement at low temperatures is often required for adherent polymers having low Tg, such as below -20°C.

A particularly useful embodiment of this invention comprises a blend of a latex of the adherent vinyl polymer of this invention and another latex. Preferably, the adherent polymer comprises at least 2% of the polymer solids of the blend, more preferably it is 10 to 60% and most preferably 20 to 40% of the latex polymer solids. It is also preferred that the blend have the total surface energy and surface energy component values such as to form a stable bond with the polyolefin. In blends with other polymers, particularly other polymer emulsions, the other component will ordinarily contain mer units useful for embracing additional

desirable properties, such as dyeability, crosslinking, softness (or hardness) etc.

The adherent vinyl addition polymer in a latex can be used "as is" or formulated with other ingredients customary to achieve given application or end use properties. Thickener is used, the amount being adjusted in a convenient manner to achieve the consistency suitable for application by the particular technique employed. Normally, the pH of aqueous compositions is adjusted in achieving the desired consistency. Another desirable ancillary component is a volatile water soluble organic antifreeze agent. Ethylene glycol and other glycols and polyglycols are especially useful for this purpose at concentrations up to about 5% by weight of the total composition. Additional stabilizing surfactants generally added at about 0.1 to about 5% may be desirable to achieve added stability. Systems containing surfactants often require the addition of antifoam agents to minimize foaming. Such agents are well known and include high boiling alcohols, polyglycols and silicone liquids. If long term stability is desired, preservative or fungicidal agents can be used in their usual small effective proportions. Particularly with the higher glass temperature compositions of this invention, plasticizers, when added in minor proportions up to 20% by weight of the polymer, are effective. Other auxiliary materials that may be used include: dispersing agents for dispersing and maintaining in a finely divided state tinting colors, sequestering agents for controlling polyvalent metal ions, humectants, such as water soluble gums and salts of

polyacrylic acid and glycols and polyglycols, bactericides and fungicides, perfumes and masking agents, corrosion inhibiting agents and so forth. Another group of auxiliary materials are ultraviolet light adsorbers, particularly for color and polymer stabilization. All of these are generally present at less than 8%, most commonly less than 4%.

In further aspects this invention embraces processes for preparing the polymer-coated polyolefin substrates. One process comprises applying a liquid or foam composition comprising said vinyl addition polymer to the untreated polyolefin substrate and curing and/or drying the polymer or allowing it to dry and/or cure. The process may include the step of applying a coating, preferably of polymer different from the adherent polymer, to said adherent polymer. In another embodiment the process may include the step of applying fibre floc to the adherent polymer. Various methods of assembling the coated substrate are available. The adherent polymer may be cured or dried before application to the polyolefin. Alternatively, or additionally the adherent polymer may be applied to another substrate which may or may not be polyolefin and a polyolefin substrate applied to the polymer.

The invention also includes articles comprising the polyolefin substrate having the vinyl addition polymer adherent thereto. Preferably such articles include non-woven fabrics, flocked materials, laminates with one or more layers of additional polyolefin and/or different polymers and top coated or otherwise decorated materials.

One embodiment of this invention relates to nonwoven webs, such as in the form of carpets, containing polyolefin fibers and a binder comprising the adhesive vinyl addition polymer described above. It is well known that it is extraordinarily difficult to bond polyolefins particularly polypropylene and this is especially evident in nonwoven carpet web bonding because of the comparatively small surface area of the fiber available for bonding. Nonwoven web containing a major amount of polypropylene fibers, including those which consist essentially or entirely of polypropylene fibers, and bonded by the polymer of this invention are unexpectedly strong and thus useful in many industrial carpets as well as home carpet applications. These carpets are particularly suitable for indoor-outdoor carpeting where stability of the adherent polymer to temperature extremes as well as light, moisture and various other weathering stresses is desired. The fibers in the nonwoven web may be ordered or haphazardly distributed. The mat may be formed by carding when the fibers are of such character, by virtue of length and flexibility, as to be amenable to the carding procedure. The fibers need not be exclusively polyolefin and may comprise natural textile fibers such as hemp or cotton, as well as artificial organic textile fibers or filaments including rayon, cellulose esters, vinyl resin fibers, condensation polymer fibers including polyamides and polyesters and the like. The web may be a result of a single card or it may be desirable to superpose plurality of such single card webs to build a mat of greater thickness for a given end use. In such a built up mat different layers may be disposed at different angles with respect to their fiber

orientations so as to give greater strength to the built up web. The length of the fibers is usually at least about 2 centimeters with lengths about 4 centimeters being preferred although ones as short as one centimeter and longer than 5 centimeters are useful in some instances. A wide range of fiber deniers is useful with the range of 1-3 denier being preferred.

Polyethylene fibers include the conventional low density monofilament fibers typically having a density in the neighborhood of 0.92 grams per cc and having a break tenacity of the order of 1 to 3 grams per denier. This material begins to soften at about 105 to 115°C and exhibits melting in the neighborhood of 110 to 125°C; it begins to exhibit 5 to 8% shrinkage in the neighborhood of 75 to 80°C and 50 to 60% shrinkage at about 100°C. Another polyethylene useful for fibers is monofilament linear high density polyethylene, also available as a flat fiber, having a break strength in the neighborhood of 3.5 to 7 grams per denier, a softening region of 115 to 125°C and a melt region in the neighborhood of 125 to 140°C; it exhibits only about 3 to 5% shrinkage in the neighborhood of 70-75°C and about 8 to 12% shrinkage at 100°C. The polypropylene fibers of this invention are commonly available as staple, monofilament and multifilament fibers which are generally isotactic. They have a density in the neighborhood of 0.95 to 0.96 grams per cc. The staple and tow have a breaking tenacity in the neighborhood of 3 to 6.5 grams per denier and a density about 0.90 to 0.91 grams per cc; the monofilament has a breaking tenacity slightly greater being about 3.5 to about 7 grams per denier and the same

density; the multifilament material covers a wide range of strengths from about 2.5 to about 8 grams per denier and has the same density as the others. These polypropylene fibers generally soften in the range from 140°C to 165°C and typically melt in the region 160°C to 180°C and have up to about 5% shrinkage at 100°C and typically 5 to 12% shrinkage at 130°C.

Because of the shrinkage of the polyolefin fibers at high temperatures, as mentioned above, drying and curing steps, employed in the adhesion of other materials to the polyolefins or with regard to adhesives used to bond polyolefins, are limited in temperature. Normally temperatures below 100°C or 110°C are preferred although temperatures up to 150°C, and perhaps a bit higher in some instances, may be employed with the more thermally stable of these fibers or for heat-setting. The polymers of the instant invention form stable bonds to the polyolefins when dried and, if desired, further cured. Although I do not wish to be bound by any theory of operation of these adherent or adhesive polymers, it is believed that this result is associated with the particular surface energetic properties of the adhesive polymers of this invention. The strength of the bond produced between the adhesive polymer and the polyolefin especially the untreated polyolefin particularly polypropylene is high even after air drying under ambient conditions. More often it is desirable to dry at elevated temperatures such as temperatures up to 100°C. For systems containing crosslinkers, catalysts may be present and these and even higher temperatures are often preferred. The higher temperatures and sometimes additional curing time is used in the crosslinking of polymers

of this invention which by virtue of their containing self-crosslinking or crosslinkable mer units in the polymer are tailored to produce finished products in which the adhesive polymer is crosslinked. The crosslinking plus the pecularily good wetting of the fibers by the adhesive polymer, which, having the appropriate surface energy properties and solubility in low solubility parameter solvents spreads on the fibers and wets them so as to interlock the fibers, thus develop a strong fabric of bound fibers.

Nonwoven fabrics of the type described herein may be used in sanitary and health care fabric products, such as diapers, sanitary napkins, hospital drapes, disposable sheets and bedpads, as fiberfill, as garment linings, in simulated leather substrates and the like.

A further embodiment provides flocked materials comprising the substrates of the invention. Flocking is a process by which textile fibers are embedded into an adhesive on a substrate producing an article which normally has a velvet or suede-like hand or feel. Polyolefins may be used as the fibers embedded and may also be used as the substrate; in either use the polyolefin is the substrate of the instant invention. The flocking process is carried out by passing a substrate, coated or printed with a composition comprising the adhesive polymer, through an electrical field in which short fibers are electrostatically directed and oriented into the adhesive. In another technique, a beater bar orients and embeds the fibers by means of vibration. Still other techniques combine both the electrostatic field and a beater bar presumably yielding optimum flock orientation and density. Using the adhesive polymer of this invention flock fabrics having a soft hand and great

durability are readily achieved particularly when employing crosslinkable adhesive polymers including both self-crosslinking systems and externally crosslinked systems with polymers having reactive functional mer units. These systems, both crosslinked and uncrosslinked, are made with appropriate degrees of durability to washing and drycleaning, atmospheric oxidation and ultraviolet and heat degredation and creep at elevated temperatures appropriate to the intended end use. Excellent color retention and ease of dyeing are further advantages imparted by the adhesive polymer of this invention having quaternary ammonium mer units, e.g. those of Lewis et al., supra. The emulsion form of the polymers is particularly attractive in the safe handling of aqueous systems, ease of cleanup, when the properties associated with high molecular weight are desired, and ease of blending with other polymer emulsion, etc. For example the dyable quaternary ammonium mer units may be in a blend latex so the combined blend exhibits the stable bond to the polyolefin and the excellent dyeability.

Another embodiment provides backcoated fabrics comprising the substrates of the invention. In the manufacture of tufted carpets the adhesive polymer or blends comprising the polymer are used for the primary backing, for tuftlock, for adhesion of a secondary backing, or for adhesion of a foam backing serving as an integral cushion for the carpet. Other examples of backcoated fabrics are imitation fur and pile fabrics wherein the adhesive polymer serves to lock the tuft and pile and to produce an article of excellent hand and durability. Mattress ticking fabrics are backcoated to produce a fabric of

improved hand, integrity, handleability, printability and abrasion resistance of the face of the fabric. Among the advantages in backcoating an uphostery fabric with the adhesive polymer of the instant invention is the improvement in hand, durability and abrasion resistance of the face of the fabric. Polyolefin films and woven or nonwoven fabrics are used as these backing materials. It is estimated that 65% of the primary backings used in tufted carpets are slit woven polypropylene, 20% are spun bonded polypropylene nonwovens and only 15% are jute. At present, almost all secondary carpet backing is jute which both costs more and has many undesirable properties as compared with the polyolefin materials. However, despite their many advantages, the polyolefin backing materials are notoriously resistant to dyeing. Surface coverings incorporating such backings exhibit "grin-through", the undesirable visibility of the polyolefin backing when the tufted surface covering is creased or bent back upon itself. Grin-through is especially pronounced in shag carpeting when there is a mismatch between coloration of the backing and the face yarns. Thus the combination of the adhesive binder of the instant invention having quaternary ammonium mer units, as described above, and polyolefin backing material produces superior binding qualities and improved dye receptivity. When the coated polyolefin backing is dyed, the backing as well as the face yarn tufted into the backing is tightly locked into a unitary whole and the polyolefin backing material will be masked from view. Because of the feasibility of getting excellent bonding by means of low

temperature drying, improved drying efficiency and economy of operation are possible without sacrifice in performance. In addition to providing excellent adhesion to the polyolefin, the adhesive polymers of this invention having quaternary ammonium mer units provide excellent dye pickup which is controllable so that the polyolefin backing material may be dyed on-shade with the face yarns thereby producing a uniform appearance while also masking any unsightly appearing backings.

Any form of polyolefin substrate material which can be tufted to form a surface covering can be used, including films and various woven and nonwoven forms, such as woven slit film and spun-bonded polyolefins. The polyolefins include any such materials used as surface covering backings, such as polyethylene, polyolefins containing two to six carbon atoms, wherein such copolymers contain at least 85% by weight of such olefin units, as defined by the Textile Fiber Products Identification Act (Public Law 85-897). Woven slit films or spun-bonded films of polypropylene are preferred. The face yarns may be any type of yarn conventionally used in the tufting of polyolefin substrates to form surface coverings, such as nylons, acrylics, polyesters and other synthetic yarns including blends of snythetic alone or with natural fibers.

When the adherent polymer comprises quaternary ammonium mer units any dyes of the direct and acid dye classes, such as the sulfonated dyes, may be used for the dyeing. The polyolefin backing material may be dyed separately from the face yarns or, more usually, the face yarns and polyolefin substrate will be dyed simultaneously after the coating and tufting steps. The dye levels are those conventionally employed in the dyeing of polyolefin surface coverings, and any dyeing technique may be used including Kuster dyeing, beck dyeing and printing techniques. The polymeric coating is applied at least to that side of the polyolefin substrate

from which the face yarns will project after tufting, but it has also been found useful to back-coat the polyolefin substrate before or after tufting to more tightly lock in the face yarns to the substrate and, in the case of woven or nonwoven backings, to also stabilize the backing material against distortion and fraying. If a secondary backing material is used, it also may be coated and dyed in accordance with the invention, if desired.

One of the outstanding advantages of the invention is that no separate curing step is required to achieve resistance to a dye cycle. The polymeric coatings are self-curing upon elimination of water, which elimination can be effected by permitting the coated substrate to dry under ambient room conditions or the curing can be accelerated by conventional drying techniques. The high temperature levels usually required for curing of other polymeric binders can be avoided and therefore the problem of possible damage to the substrate when, for example, the temperature approaches the melting point of the polyolefin material.

It has been found, further, that the good substrate masking properties achieved by the improved dyeability permit reduction in face yarn density and high speed dyeing with different colors. In the past, masking of the substrate has required high surface yarn density or the needlepunching of another yarn layer into the backing. The expense of such approaches can now be avoided. The invention thus opens up polyolefin backings to use in tufted upholstery fabrics since, heretofore, primary backings for such uses have been limited to backings of rayon or other fibers which accept dyes naturally.

In one embodiment of this invention the adhesive latex polymers of this invention, or compositions comprising them, serve to bond a polyolefin substrate to another substrate, comprising a bulk object, a sheet or a film. Useful objects

are obtained by incorporating the properties of the second sheet or film with a polyolefin film in such way as to produce a laminate having the desirable features of both. For example, the vapor or moisture barrier characteristics or the sunlight protection characteristics may be improved by the other film while the polyolefin serves to improve the slip, strength or coefficient of friction characteristics as its contribution to the properties of the laminate. Thus, a laminate can be made which is more heat sensitive than the polypropylene in order to improve film heat sealability at a relatively low temperature or to produce a coating which is readily painted, lacquered, printed or decorated in some other manner. Of course, the adhesive polymer of the instant invention may produce these latter properties without the necessity of a second film; however, in some cases the fabricator may prefer the second film approach for other reasons.

The articles of this invention can be prepared by coating one surface of a polyolefin substrate, such as a film, with the adhesive polymer of the instant invention. The coating can be accomplished by a simple operation in which a latex of the copolymer is applied to the film by spraying, brushing, rolling, dipping, or similar technique. Thereafter, the water is removed by evaporation leaving an adherent layer of the copolymer. The thickness of the adherent layer of copolymer is not critical, but for optimum results should be from about 0.02 to about 3.0 mils.

Alternatively the adhesive polymer may be applied to the other substrate or to both the other and the polyolefin substrate. The last of these is exemplified by the application of the adhesive polymer in the nip formed between the two substrates, such as between moving films each being carried by suitable rollers. In each case the polyolefin and other substrate are firmly joined by the adhesive polymer between them. Of course, both substrates may be polyolefin.

The composition of the adhesive polymer or, if used in a blend, the blend can be adjusted to provide good adhesion to the non-olefinic surface in cases in which the laminate comprises such surface. For example, if the other surface is of higher energy or is more polar, the adhesive polymer or blend is modified in these directions while remaining within the limits required for stable bonding to the polyolefin.

Suitable materials which can be used as the other film in accordance with the present invention to produce laminated articles are thermoplatic film-forming polymers and include a second polyolefin film of, for example, the hydrocarbon polymers such as polyethylene (both low and high density), poly(butene-1), polypropylene, mixtures of polyethylene and polypropylene, and mixtures of polypropylene and polybutylene; and other films such as poly(vinyl acetate); poly(vinyl chloride); poly(vinylidene chloride); vinyl chloride/vinyl acetate interpolymers; vinyl chloride/vinylidene chloride interpolymers; copolmers of vinylidene chloride with, for example, acrylonitrile, methacrylonitrile; the alkyl, aryl, alkaryl, aralkyl or cycloalkyl acrylates or methacrylates; the alkoxy alkyl acrylates or methacrylates; the haloalkyl acrylates or methacrylates, alkyl α-halo acrylates; methyl isopropenyl ketone and methyl vinyl ether; poly(vinyl propionate); poly(vinyl chloroacetate); poly(vinyl naphthalene); poly(ethyl vinyl ether); polyesters such as poly(ethylene terephthalate) and copolyesters of ethylene terephthalate and ethylene isophthalate; polyamides such as poly(hexamethylene adipamide), poly(hexamethylene sebacamide), polycaproamide, N-methoxymethyl poly(hexamethylene adipamide), polyacrylamide, polymethacrylamide and poly(N-vinyl succinimide); poly(vinyl acetals) such as poly(vinyl butyral); poly(vinyl fluoride); poly(vinylidene fluoride); vinyl fluoride/vinylidene

fluoride interpolymers; poly(chlorotrifluoroethylene); poly (tetrafluoroethylene); interpolymers of tetrafluoroethylene with hexafluoropropylene; vinylfluoride/tetrafluoroethylene interpolymers; vinylidene fluoride/hexafluoroethylene interpolymers; poly(oxymethylene), poly(acrylonitrile); poly(vinyl pyridine); polymers of allyl glycidyl ether; cellophane; cellulose esters such as cellulose acetate and cellulose nitrate; rubber hydrochloride, and the like and even stereoregular polypropylene itself.

Particularly desirable films are those with low gas and moisture vapor transmission characteristics. These barrier layer materials are applied to the adhesion polymer surface coating on the polyolefin and they are exemplified by vinylidene chloride polymers, vinyl chloride polymers, vinylidene fluoride polymers and copolymers of these with other materials usually being at least 70 weight percent of these or a combination of the monomers corresponding to these homopolymers. The vinyl halide polymers may include light stabilizers, plasticizers, heat stabilizers and other additives well known in the art and generally found advantageous in such films.

A further embodiment provides substrates bearing the adherent polymer applied as a fluid coating. Decorative ink and paint coatings of the types well known in these art fields are adherent to polyolefins when the polyolefin has a surface coating comprising the adherent polymer of this invention. In the same way complete or partial layers of other films can be applied onto the adherent polymer from either an aqueous latex or a solution in a volatile organic solvent. The coating of this type may be applied

by dipping, spraying, brushing, rolling, doctoring, painting, printing or the like in a conventional manner. The adhesive polymer of this invention can serve as a tiecoat to bind such systems to the polypropylene and to make available a wettable surface on the polypropylene for the application of the water borne or organic solvent borne system. An alternative to this tiecoat procedure is to utilize the adhesive polymer as the binder or vehicle for the paint or ink or to use it as a portion of the binder or vehicle in which case a sufficient amount of the adhesive polymer of this invention is to be used so that the paint or ink has the surface energy properties necessary for good bonding onto the polyolefin. Drying and curing steps if desired are similar to those described above.

The following abbreviations are used in this specification or represent monomers useful in these copolymers:

| | |
|---|---|
| CHMA | cyclohexyl methacrylate |
| BA | butyl acrylate |
| $VV_{10}$ | vinyl monomer $VV_{10}$ (Shell Chemicals) vinyl ester of a saturated tertiary carboxylic acid of 10 carbon atoms having the structure : 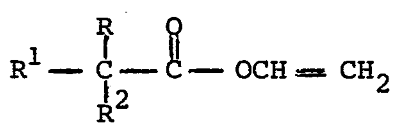 where R, $R^1$ and $R^2$ are saturated alkyl groups |
| nDA | n-decyl acrylate |
| nDMA | n-decyl methacrylate |
| IDA | isodecyl acrylate |
| tBuSt | t-butyl styrene |

| | |
|---|---|
| St | styrene |
| $C_{10}AM$ | N-decyl acrylamide |
| EA | ethyl acrylate |
| VA | vinyl acetate |
| 2-EHA | 2-ethylhexyl acrylate |
| BDA | butylene diacrylate |
| IDMA | isodecyl methacrylate |
| AA | acrylic acid |
| MMA | methyl methacrylate |
| IA | itaconic acid |
| AN | acrylonitrile |
| $VCl_2$ | vinylidene chloride |
| AM | acrylamide |
| 1,4BDA | 1,4 butylene diacrylate |
| MOA | equimolar mixture of acrylamide and methylol acrylamide |
| 1,3BDA | 1,3 butylene diacrylate |
| MIPAP | $\beta$ -methacryloxy propyl acid phthalate (mixed propyl groups) |
| DCPOEMA | dicyclopentenyloxyethyl methacrylate |
| DCPOEA | dicyclopentenyloxyethyl acrylate |
| IBOA | isobornyl acrylate |
| IBOMA | isobornyl methacrylate |
| DMF | dimethyl foramide |
| MEK | methyl ethyl ketone |
| THF | tetrahydrofurane |
| PP | polypropylene |

Some preferred embodiments of the invention will now be more particularly described in and by the following examples in which all parts and percentages are by weight unless indicated otherwise. The following materials and test methods are used in the examples unless in the given example

another or a modification is specified.

Evaluation Tests

1. Adhesion

Several tests are used to evaluate the adhesive vinyl additon polymer adhesion onto polypropylene including tape tests, knife and eraser adhesion tests and an adhesive peel strength test.

The tape tests require applying a portion of a tape onto a polypropylene substrate coated with the adhesive polymer system being evaluated. The remainder of the piece of tape is held so a forty five degree angle is made with the plane of the adhered portion of tape and the polypropylene substrate. The tape is then pulled rapidly by hand. This procedure is repeated after using a knife to inscribe a "X" through the adhesive polymer coating on the polypropylene substrate. The tape is then applied over the inscribed area and pulled rapidly at a forty five degree angle as before. Two different tapes are used in this test: Acetate Fibre Tape # 710 (3M Company); and TFE Plastic Film Tape # 5490 a 3.5 mil tape (3M Company). The tape test results are ranked as follows: P-pass, no loss of binder film off the polypropylene substrate; VSF-very slight failure, only very slight removal of binder film (up to ca. 25%) on area covered by tape; SF-slight failure, some removal of binder film (25-50%) on area covered by tape; F-failure, over 50% removal of film on area covered by tape.

In the eraser test three successive draw downs (approximately 5 cm (2 in.) length) of an eraser (Efeberhand Faber # 101) are made across

the area of polypropylene substrate coated with the film being evaluated. The results are ranked as follows: P-pass, no exposure of uncoated polypropylene substrate; SF-slight failure, some exposure of polypropylene substrate (up to ca. 50%); F-failure, complete exposure of polypropylene substrate.

Adhesion peel strength tests are run at 180° and 90° (T) angles. The polypropylene substrate used and the testing conditions are described in each Example. Samples for testing are prepared by coating the adhesive latex polymer or a blend of this with a conventional polymer (solids on solids basis) as a tiecoat (or primer) onto the polypropylene with a # 30 RDS coating rod. This coat is either dried in an oven at 82°C (180°F)/8 min. and then coated with a topcoat (preferably Polymer A below) ( # 75 RDS coating rod), or preferably, the topcoat is applied over the wet tiecoats as specified. In either case after the topcoat is applied the sample is placed in a 82°C (180°F) oven for 8 min. and then laminated to a 0.14 to 0.17 kg (5 to 6 oz) warp knit nylon fabric under 0.34 MPa (50 psi) pressure for 3 sec. at 160°F. 2.5 cm (one inch) wide strips of the fabric are used for the peel strength tests. As specified, a 90° (T) or a 180° peel strength test is performed on an Instron test machine at a specified cross head speed. All samples are held at ambient conditions for at least ten hours then conditioned at 22°C (72°F) and 60 relative humidity for one hour before testing. Two

test values agreeing within ten percent are accepted, if the first two do not so agree three or four are run to obtain an average deviation of ten percent or less. In other respects the general procedure of ASTM test method D-903 is followed.

2. Solubility

Solubility profiles are measured by adding a weighed amount of polymer film (0.1-0.5 g) to 20-25 ml of a non-hydrogen bonding solvent and determining the solubility after 3 days of intermittent agitation. The solubility is determined by separating, drying and weighing the undissolved portion of the film. Solubility parameters ranged from 6.8 to 8.2 for the solvents used: isooctane, n-pentane, 1-hexane, diisobutylene and cyclohexane, ("Polymer Handbook, 2nd ed.", J. Brandrup, E. H. Immergut, J. Wiley and Sons N.Y. 1975). The solvents are available and further described as follows:

(a) 2,2,4-trimethylpentane, (isooctane) Reagent ACS Eastman, Eastman Kodak Co., Rochester, N.Y. 14650

(b) pentane, 98% Aldrich, Aldrich Chemical Co., Inc., Milwaukee, Wisc.. 53233

(c) 1-hexene, 99% Aldrich, supra,

(d) diisobutylene, (practical) Eastman,

(e) cyclohexane, ACS Reagent, Aldrich, supra.

For crosslinked polymers or crosslinkable polymers the solubility measurements are performed before the crosslinking is effected, this is normally the condition in which the polymer is applied to the polyolefin.

3. Contact Angle Measurements and Surface Energy Determinations

The equations given by D. K. Owens and R. C. Wendt in Journal of Applied Polymer Science, Vol. 13, p. 1741 (1969) are used to determine polymer surface energy.

Materials and Equipment:

(a) Diiodomethane (methylene iodide), Aldrich 99%, stabilized with copper and stored in the dark, is used.

(b) Water is deionized with Technical Amberlite Monobed® MB-3 Ion Exchange Resin (Rohm and Haas Company) before use.

(c) Polymer films are cast on Mylar® film, free from surface irregularities using RDS Coating Rods (#5-30).

(d) Contact angle measurements are made using a Contact Angle Goniometer System, Model A100 (Rame-Hart Inc., 43 Bloomfield Ave., Mountain Lake, N.J. 07046).

Droplets of water and methylene iodide ranging from 2-4 mm in diameter are deposited by means of a micrometer head microsyringe on a level polymer film. The advancing contact angle of the static liquid drop is measured directly by using the Model A100 gonimeter. Measurements are made immediately after the liquid drop is placed on the polymer surface under ambient conditions (22 ± 0.5°C). Each contact angle value is an average of 5 separate determinations. The maximum deviation from the mean for a specific system is 2°; if a greater deviation is observed (rarely) more measurements are made.

As described by Owens and Wendt, contact angle measurement of water and methylene iodide against a solid lead to simultaneous equations which are solved for the polar and nonpolar component of the solid surface energy with the total surface energy being the sum of these two components.

The equation used to determine surface energy is

$$1 + \cos\theta = 2\sqrt{F_S^D}\left(\frac{\sqrt{F_L^D}}{F_L}\right) + 2\sqrt{F_S^P}\left(\frac{\sqrt{F_L^P}}{F_L}\right) \quad \text{(Eq. 1)}$$

wherein θ is the measured advancing contact angle.

F is a surface free energy.

D is a superscript indicating the nonpolar dispersive component of F.

P is a superscript indicating the polar component of F.

S is a subscript indicating that the surface is between a solid and air

L is the corresponding subscript for a liquid-air surface.

Equation 1 differs from Equation 7 of Owens and Wendt in the identification "polar component" for their "hydrogen bonding component" and in the interfaces (surfaces) being with air rather than the saturated vapor. The total surface energy of a solid is given by $F_S = F_S^D + F_S^P$ (Eq. 2)

The three symbols in Equation 2 are referred to, respectively, elsewhere in this specification, as: SE, the total surface energy; DCE, the nonpolar dispersive component of the surface energy; and PCE, the polar component of the surface energy. The dispersive component, polar component and total surface energies used in the calculations are 21.8, 51.0 and 72.8 ergs./sq.cm., respectively, for water and 48.5, 2.3 and 50.8 ergs./sq.cm., respectively, for methylene iodide (see J.R. Dann, J. Colloid and Interface Science Vol. 32, p 302 (1970).

The polyolefin substrates in the various examples are "untreated polyolefin that is, the polyolefin surface has not been treated by electrical, chemical or other means to make it more easily wettable by water organic solvents and other polymers. Surface energy measurements performed on various polyolefin substrates give the following values:

| | SE | DCE | PCE |
|---|---|---|---|
| Amoco Fabrics, Amoco # 6011 polypropylene sheet | 38.6 | 36.5 | 2.1 |
| Avisun, Olefane Type 3.0 AT2 polypropylene film | 38.9 | 33.4 | 5.5 |
| Polybac™ polypropylene woven slit film rug scrim, Patchogue Plymouth Division of Amoco Fabrics | 38.5 | 38.3 | 0.2 |
| Standard grade polypropylene sheet, Commercial Plastic Supply Corporation | 35.6 | 30.1 | 5.5 |
| Avisun, Olefane™ Type 3.0 AT2 corona treated polypropylene film | 44.1 | 32.5 | 11.6 |

| | | | |
|---|---|---|---|
| Exxon, PP-12B-SHT, 3 mil corona treated polypropylene | 45.7 | 28.1 | 17.6 |
| Mobil Chemical Company, medium density polyethylene film corona treated | 49.2 | 15.3 | 33.9 |
| Mobil Chemical Company, medium density polyethylene film | 35.8 | 29.4 | 6.4 |
| Volara™ Foam, Valtek, Inc., Lawrence, Mass. Polyethylene foam | 39.8 | 38.8 | 1.0 |
| Ethylene-propylene dimer rubber | 33.2 | 32.0 | 1.2 |
| Hercules Type B 500, 100 gauge oriented polypropylene film | 33.9 | 33.2 | 0.7 |
| Hercules Electrical Grade N-400 non-oriented polypropylene film | 29.7 | 24.0 | 5.7 |
| Norton 60 mil polypropylene sheet | 38.6 | 37.4 | 1.2 |

Polymerization Process 1 (Emulsion)

A reaction kettle equipped with a mechanical stirrer, reflux condenser, thermometer and suitable ports, is flushed with nitrogen for 15 minutes. The vessel is charged with 300 parts of water, 1 part ammonium persulfate and is heated to 80°C under nitrogen. In a separate vessel a monomer emulsion is prepared as follows:

60 parts water
0.13 parts ammonium persulfate
10 parts Alipal® EP-110 (30%) (GAF Corporation)
200 parts of the desired monomer(s)

The monomer emulsion is added continuously to the heated kettle for 60 minutes maintaining the reaction temperature at 80 to 85°C. After completion of the addition the temperature is maintained for 40 minutes whereupon the polymer emulsion is cooled to room temperature and filtered. The product is at 34.7% solids and has a pH of 2.0. To obtain a product with higher polymer solids the

amount of water in the initial charge is decreased; e.g., decreasing the initial charge to 175 parts of water results in a product at about 45% solids.

In place of Alipal EP-110 other anionic surfactants such as sodium lauryl sulfate, sodium dodecylbenzene sulfonate, tetrasodium N-(1,2-dicarboxyethyl)N alkyl ($C_{18}$) sulfosuccinamate disodium salt of half ester of sulfosuccinic acid derived from a $C_{10}$-$C_{12}$ straight chain alcohol mixture, disodium salt of half ester of sulfosuccinic acid derived from an ethoxylated nonylphenol or anionic/nonionic surfactants such as Abex® VA-50 (Alcolac Inc) may be used, as may mixtures of these as well as mixtures with well known nonionic surfactants.

Polymerization Process 2 - (Redox Emulsion)

A reaction kettle equipped as in Process 1 is flushed with nitrogen for 15 minutes. The kettle is charged with the following kettle charge:

653 parts water
9.6 parts octylphenoxypoly(39)ethoxyethanol (70%)
45 parts ferrous sulfate solution (0.1%)
12.5 parts tetrasodium ethylenediamine tetraacetic acid solution (1%) (Dow Chemical)
112 parts of the desired monomer(s)

The kettle charge is warmed to 40°C under nitrogen and a seed initiator consisting of 0.83 parts diisopropylbenzene hydroperoxide and 0.23 parts sodium formaldehyde sulfoxylate in 15 parts of water is added. Polymerization starts almost immediately with a 14°C temperature rise. The temperature is maintained at 55-60°C for 20 minutes and a seed stabilizer consisting of 9.6 parts of the octylphenoxy polyether recited above is added in 15 parts of water. The reaction temperature is adjusted to 60 to 65°C and monomer emulsion is added gradually for 185 minutes. The monomer emulsion consists of:

141 parts of water

48.3 parts octylphenoxypoly(39)ethoxyethanol (70%)
1012 parts of the desired monomer(s)
7.4 parts diisopropylbenzene hydroperoxide

An initiator solution consisting of 2 parts of sodium formaldehyde sulfoxylate and 112.5 parts of water is fed to the reaction kettle as a cofeed with the monomer emulsion. Upon completion of these gradual addition feeds, two parts of diisopropylbenzene hydroperoxide and 0.56 parts of sodium formaldehyde sulfoxylate in 31 parts of water are added to the reaction mixture maintaining the temperature at 60-65°C for 10 minutes. The polymer emulsion is then cooled to room temperature and filtered. It has 48.7% solids and is at a pH of 3.0. Other surfactants such as those described in Example 1 may be used in place of the octylphenoxy polyether.

Polymerization Process 3 - (Solution Polymer)

A reaction kettle equipped with a stirrer, reflux condenser, thermometer and graduated addition funnel, is flushed with nitrogen for 15 min. The flask is charged with 150 parts toluene and heated to reflux. A solution of 150 parts of the desired monomer(s) and 1.5 parts benzoyl peroxide is added continuously over 5 hr. while maintaining reflux. After the gradual addition is completed, 0.08 parts benzoyl peroxide in 5.0 parts toluene is added and the reflux maintained for an additional 30 min. The solution is cooled to room temperature; it has 42.3% polymer solids.

Polymerization Process 4 - (Bulk Polymer)

A reaction kettle equipped as in Process 3 is flushed with nitrogen for 15 min. The flask is charged with 50 parts of the desired monomer(s) and 0.25 parts Luazo® 79 (Pennwalt, Lucidol Division) and heated to 90-95°C in a hot water bath. After the reaction raises the temperature to 140°C an additional 0.25 parts Luazo 79 (2-t-butylazo-2-cyanopropane) is added while the

temperature is maintained at 90-95$^{o}$C for 30 min. The flask is cooled to room temperature and the polymer is diluted with toluene for use.

Polymerization Process 5 - (Solution Polymer)

A 50 ml flask equipped with a condenser, thermometer, and magnetic stirrer is charged with 10g. of the desired monomer(s), 10.0g. toluene and 0.05g. benzoyl peroxide. The charged flask is evacuated and filled with nitrogen three times. While maintaining a nitrogen atmosphere, the flask is heated to 75-85$^{o}$ for 3 hours. The solution is cooled to room temperature, it has 48.6% polymer solids.

Unless specified otherwise, the following formulations are used in the examples.

1. Tiecoat

| | | |
|---|---|---|
| Adherent Latex Polymer (45%) | | 222g. |
| Cellosize$^{R}$ QP4400) | pre-slurried | 2g. |
| Water ) | | 5g. |
| Aqueous Ammonia to pH 7.5-8.0 | | |
| Viscosity Brookfield RVF 6/10 = | | 5,000-7,000 cps. |

2. Tiecoat blends

| | | |
|---|---|---|
| Adherent latex polymer and Polymer A 1:1 on a solids basis (51.5% TS) | | 194g. |
| 15% Sodium Sesquicarbonate Solution | | 8.0g. |
| Cellosize QP4400) | pre-slurried | 1.4g. |
| Water ) | | 7.0g. |
| pH 7.0-7.5, Brookfield RVF 6/10 = | | 5,000-7,000 cps. |

3. Topcoat Formulation

| | | |
|---|---|---|
| Polymer A | | 167g. |
| 15% Sodium Sesquicarbonate Solution | | 6.7g. |
| Cellosize QP4400) | pre-slurried | |
| Water ) | | |
| Viscosity Brookfield RVF 6/10 = 5,000 cps. | | |

Example 1 - Copolymerized Acid

Untreated Avisun film and Polybac[R] scrim substrates are used in the 90$^{o}$ or T peel strength test described above. The nylon fabric is bonded by blends of polymers of this invention in latex form, prepared by Process 1, blended with Polymer A at equal solids. Polymer A is a copolymer employing a dyeable crosslinking functionality described in U.S. Patent No. 3,678,098 and is a copolymer of ethyl acrylate and 2-3% of the crosslinking monomer described in the patent. The results, in the following table, show the marked improvement obtained due to the acid in the copolymer. Curing is advantageous when water, solvent, wash or creep resistance is to be enhanced.

## Table I

### T Peel Strength for Tiecoat Blends

| Ex. | Tiecoat | Avisun Untreated Film 10 cm/min Kgm$^{-1}$ (lb/in) un-cured[1] | cured[2] | Avisun Untreated Film 50 cm/min Kgm$^{-1}$ (lb/in) un-cured[1] | cured[2] | Polybac™ 10 cm/min Kgm$^{-1}$ (lb/in) un-cured | cured | Scrim 50 cm/min Kgm$^{-1}$ (lb/in) un-cured | cured |
|---|---|---|---|---|---|---|---|---|---|
| 1A | IDMA/IBOA(50/50)/PolymerA | 107(6.0)[3] | 73(4.1)[5] | 125(7.0)[3] | 61(3.4)[5] | 125(7.0)[3] | 68(3.8)[5] | 93(5.2)[7] | 80(4.5)[7] |
| 1B | IDMA/IBOA/AA (49.75/49.75/0.5)/ Polymer A | 150(8.4)[3] | 86(4.8)[3] | >178(>10)[6] | 121(6.8)[3] | 173(9.7)[3] | 143(8.0)[3] | 120(6.7)[7] | 100(5.6)[4] |

1. After sample preparation, the sample is allowed to stand at RT for 2 days before testing.
2. Same as 1 above with an additional heating for 10 min. at 110°C (230°F).
3. Adhesive failure to nylon fabric.
4. Adhesive failure to polypropylene.
5. Mixed tiecoat and topcoat cohesive failure.
6. Cohesive failure of polypropylene substrate.
7. Mixed adhesive failure to polypropylene and tiecoat to topcoat.

Example 2

Table II

180° Peel Strength for Tiecoats with Polymer A Topcoats

| Ex. | Tiecoat | 20 cm/min $Kgm^{-1}$ (lb/in) | Mode of Failure |
|---|---|---|---|
| 2A | 49.75 IBOA/49.75 IDMA/0.5 AA | 145(8.1) | 1 |
| 2B | IBOA/IDMA (1:1) | 114(6.4) | 1 |
| 2C | IBOA/IDMA/AA(49.75/49.75/0.5)/ Polymer A (1:1) | 414(23.2) | 2 |
| 2D | IBOA/IDMA(1:1)/Polymer A(1:1) | 289(16.2) | 3 |
| 2E | IBOA/IDMA/AA(49.75/49.75/0.5)/ Polymer A (30:70) | 205(11.5) | 1 |
| 2F | IBOA/IDMA(1:1)/Polymer A 30:70) | 186(10.4) | 1 |
| 2G | Polymer A | 48(2.7) | 2 |
| 2H | IBOMA/IDMA(45/55)/Polymer A (1:1) | 34(1.9) | 2 |
| 2I | IBOMA/IDMA(40/60)/Polymer A (1:1) | 193(10.8) | 3 |
| 2J | IBOMA/IDMA(35/65)/Polymer A (1:1) | 259(14.5) | 3 |

Table II (cont'd)

| Ex. | Tiecoat | 20 cm/min $Kgm^{-1}$ (lb/in) | Mode of Failure |
|---|---|---|---|
| 2K | IBOMA/IDMA/30/70)/Polymer A (1:1) | 414(23.2) | 1 |
| 2L | IBMA/IBOA/IDMA/AA(24.9/ 15/59.90/0.2) | 25(1.4) | 3 |
| 2M | IBMA/IBOMA/IDMA/AA(24.9/ 15/59.5/0.2) | 36(2.0) | 1 |
| 2N | 2L + Polymer A(1:1 blend) | 95(5.3) | 1 |
| 2O | 2L + wet on wet application | 68(3.8) | 1 |
| 2P | 2M + wet on wet application | 96(5.4) | 1 |
| 2Q | 2N + wet on wet application | 57(3.2) | 2 |

Norton 60 mil polypropylene sheet used for testing. All adherent latex polymers prepared by process 1.

1. Tiecoat to topcoat adhesive failure.
2. Adhesive failure to polypropylene.
3. Mixed polypropylene adhesive failure and tiecoat to topcoat adhesive failure.

Example 3

Table III

T Peel Strength For Tiecoats With Polymer A Topcoat

| Ex. | Tiecoat | 20 cm/min $Kgm^{-1}$ (lb/in) Avisun | Failure Mode | Polybac | Failure Mode |
|---|---|---|---|---|---|
| 3A | IBOMA/IDMA(45/55)/Polymer A (1:1) | 7(0.4) | 1 | 29(1.6) | 1 |
| 3B | IBOMA/IDMA(40/60)/Polymer A (1:1) | 1.8(0.1) | 1 | 45(2.5) | 1 |
| 3C | IBOMA/IDMA(35/65)/Polymer A (1:1) | 9 0.5 | 1 | 96(5.4) | 2 |
| 3D | IBOMA/IDMA(30/70)/Polymer A (1:1) | 382(21.4) | 3 | 193(10.8) | 2 |
| | | Norton Polypropylene | | | |
| 3E | BA/IDMA/IBOA/AA(12.5/43.5/43.5/0.5) | 227(12.7) | 2 | | |
| 3F | BA/IDMA/IBOA/AA(12.5/40.4/46.6/0.5) | 278(15.6) | 4 | | |
| 3G | BA/IDMA/IBOA/AA(12.5/37.3/49.7/0.5) | 259(14.5) | 4 | | |

Table III (cont'd)

| Ex. | Tiecoat | 20 cm/min $Kgm^{-1}$ (lb/in) Norton | Failure Mode |
|---|---|---|---|
| 3H | BA/IDMA/IBOA/AA(6.2/46.6 46.7/0.5) | 243 (13.6) | 4 |
| 3I | BA/IDMA/IBOA/AA(6.2/43.5 49.8/0.5) | 236 (13.2) | 2 |
| 3J | BA/IDMA/IBOA/AA(0/49.75 49.75/0.5) | 246 (13.8) | 2 |

Examples 3A-3D performed with Avisun or Polybac® polypropylene substrates as indicated.

Examples 3E-3J performed with Norton 60 mil polypropylene sheet.

All adherent latex polymers prepared by method 1.

1. Polypropylene adhesive failure.
2. Mixed polypropylene and tiecoat to topcoat adhesive failures.
3. Adhesive failure to fabric.
4. Tiecoat to Topcoat adhesive failure.

Example 4

Table IV

180° Peel Strength For Tiecoat-Amoco 6011 Polypropylene Sheets

| Ex. | Tiecoat | 20 cm/min $Kgm^{-1}$ (lb/in) | Failure Mode |
|---|---|---|---|
| 4A | IBOMA/IDMA (45/55) | 84 (4.7) | 1 |
| 4B | IBOMA/IDMA (40/60 | 112 (6.3) | 1 |
| 4C | IBOMA/IDMA (35/65) | 84 (4.7) | 1 |
| 4D | IBOMA/IDMA (30/70) | 62 (3.5) | 1 |
| 4E | IBOA/IDMA/AA (49.75/49.75/0.5) | 234 (13.1) | 1 |

All tiecoats prepared by method of Process 1.

1. Tiecoat to topcoat adhesive failure.

Example 5

Table V

Tiecoat Evaluation 180° Peel, Polymer A Topcoat

| Ex. | Tiecoat | 10 cm/min $Kgm^{-1}$ | 10 cm/min lb/in | Failure Mode |
|---|---|---|---|---|
| 5A | IBOMA/BA (40/60) | 50 | 2.8 | 1 |
| 5B | IBOA/$VV_{10}$ (1:1) | 100 | 5.6 | 2 |
| 5C | IBOA/$VV_{10}$ (30/70) | 64 | 3.6 | 3 |
| 5D | IBOA/$VV_{10}$ (60/40) | 73 | 4.1 | 3 |
| 5E | IBOA/$VV_{10}$/AA (49.75/49.75/0.5) | 125 | 7.0 | 2 |
| 5F | IBOMA/IDMA (30/70) | 62 | 3.5 | 4 |
| 5G | IBOMA/IDMA/AA (49.75/49.75/0.5) | 53 | 3.0 | 4 |

All copolymers prepared by process 1.
Untreated Norton 60 mil polypropylene is the substrate.

1. Adhesive failure to propylene.
2. Mixed tiecoat to topcoat adhesive failure and adhesive failure to fabric.
3. Adhesive failure to fabric.
4. Cohesive failure of tiecoat.

Example 6

Table IV

Evaluation of Copolymers as Polypropylene Non-Woven Binders

| Ex. | Composition | % Add On | Tensile MD $Kgm^{-1}$ (lb/in) Dry | Tensile MD $Kgm^{-1}$ (lb/in) Wet | Wash Survival 43° | Wash Survival 60° |
|---|---|---|---|---|---|---|
| 6A | BA/IBOMA (60/40) | 31 | 134 (7.5) | 134 (7.5) | >19 | >8 |
| 6B | BA/IBOMA/AA (58/40/2) | 32 | 139 (7.8) | 93 (5.2) | >19 | >8 |
| 6C | BA/IBOMA/AA (56/40/4) | 30 | 150 (8.4) | 59 (3.3) | 1 | 5 |
| 6D | BA/IBOA (60/40) | 44 | 191 (10.7) | >196 (>11.0) | 18 | 4 |

1. A 0.5% Zonyl FSN solid/solid additive used.
2. Web roped but did not disintegrate.

All copolymers prepared by process 1.

Example 7

Table VII

Polypropylene - Urethane Foam Lamination, Polymer A Topcoat

| Ex. | Tiecoat | Adhesive Performance | Failure Mode |
|---|---|---|---|
| 7A | 59.5 IBOMA/40 BA/0.5 AA | excellent | cohesive failure of urethane foam |
| 7B | 69.5 IBOA/30 BA/0.5 AA | excellent | cohesive failure of urethane foam |
| 7C | IBOMA/BA/DCPOEMA (30/68/2) | fair | adhesive to polypropylene |
| 7D | IBOMA/BA/AA (59.3/40/0.7) | excellent | cohesive in foam |
| 7E* | IBOMA/BA/AA (59.3/40/0.7) | excellent | cohesive in foam |
| 7F | IBOA/BA/AA (69.5/30/0.5) | excellent | cohesive in foam |

*Example 7E employs a soft analog of Polymer A as a topcoat.

Tiecoat polymers are prepared by process 1.

Example 8 - Flocked Polypropylene Substrates

Demonstration of improved flocked binder performance with acrylic acid containing IBOA-IDMA adherent polymer.

Formulations

1) Tiecoat

| | |
|---|---|
| Polymer A | 8.4 gms. |
| IBOA-IDMA (1:1) copolymer | 110 gms. |
| 15% Sodium Sesquicarbonate | 8 gms. |
| Cellosize QR4400 | 1.3 gms. |
| Water | 6.5 gms. |

pH 7.0 to 7.5 stirred to viscosity of 18,000 cps.

Same formulation is used with IBOA/IDMA/AA (49.75/49.75/0.5) adherent copolymer; both prepared by the thermal process number 1.

2) Topcoat

| | |
|---|---|
| Polymer B; a harder analog of Polymer A (or Polymer A/B blend) | 200 gms. |
| 15% Sodium Sesquicarbonate | 8 gms. |
| Cellosize QR4400 | 1.3 gms. |
| Water | 2.5 gms. |

Same pH and viscosity as tiecoat formulations.

Application of adhesive 2.5 wet mils of tiecoat are applied by a Gardner Knife. The topcoat is applied over the wet tiecoat with a Gardner Knife: 14 mils on polypropylene film; 20 mils on Polybac®.

The wet topcoat was beater bar flocked with 0.025 inch nylon flock (1.5 denies) and placed in a 180°F. oven for 20 mins. To test adhesive durability a water spot test is performed, A chemical spatula is used to gouge flock and adhesive away from the polypropylene substrate (approximately a 0.5 centimeter diameter circle), 10 drops of water (approximately 2 centimeter diameter circle) is placed over the gouged area, after 10 minutes of contact with water a qualitative adhesive

rank is made by picking at the flocked sample, which is in contact with the water, using a chemical spatula.

Example 8

| Ex. | Tiecoat | Topcoat | Adhesive Performance |
|---|---|---|---|
| 8A | IBOA/IDMA (1:1) Blend with Polymer A | Polymer B | poor[1] |
| 8B | IBOA/IDMA (1:1) Blend with Polymer A | Polymer A/ Polymer B 1/1 Blend | poor[1] |
| 8C | IBOA/IDMA/AA (49.75/ 49.75/0.5 Blend with Polymer A | Polymer B | good[2] |
| 8D | IBOA/IDMA/AA (49.75/ 49.75/0.5 Blend with Polymer A | Polymer A/ Polymer b 1/1 Blend | good[2] |

The same results are obtained on both Avisun film and Polybac[R].

1. Poor - 1/2 to 3/4 of the flocked area covered by the water was swollen and could easily be picked away from the polypropylene substrate with the spatula, showing adhesive failure to polypropylene.

2. Good - Virtually no swelling of binder covered by the water, good adhesion to polypropylene. In order to remove the flocking and the binder the binder must be torn.

Example 9

Table IX

180° Peel Strength Comparison of Emulsion and Solution Polymers

| Ex. | Tiecoat | Process Preparation | 20 cm/min $Kgm^{-1}$ (lb/in) Room Temperature |
|---|---|---|---|
| 9A | IBOA/IDMA (1:1) | 1 | 114(6.4) |
| 9B | IBOA/IDMA (1:1) | 5 | 34(1.9) |
| 9C | IBOA/IDMA/AA (49.75/49.75/0.5) | 1 | 145(8.1) |
| 9D | IBOA/IDMA/AA (49.75/49.75/0.5) | 5 | 39(2.2) |

Polymer A is used as the topcoat. All failures are tiecoat to topcoat. The substrate is 60 mil Norton untreated polypropylene.

Example 10 - Surface Energetics and Solubilities

The surface energy properties and solubility of the various adherent polymers is given in the following table.

| Adherent Polymer of Example | SE | DCE | PCE | Avg. Solubility g./100 ml. |
|---|---|---|---|---|
| 2A | 30.2 | 22.7 | 7.5 | |
| 2B | 24.1 | 20.8 | 2.3 | |
| 3E | 21.9 | 21.2 | 0.7 | |
| 3F | 25.8 | 24.3 | 1.5 | |
| 3J | 30.2 | 22.7 | 7.5 | |
| 4D | 26.9 | 25.2 | 1.7 | |
| 4E | 30.2 | 22.7 | 7.5 | |
| 5B | | | | 0.82 |
| 5F | 27.0 | 18.0 | 9.0 | |
| 5H | 26.9 | 25.2 | 1.7 | |
| 6C | 38.6 | 29.1 | 9.5 | |
| 6D | 22.5 | 17.4 | 5.1 | |
| 6E | | | | 0.81 |
| 7A | 37.9 | 24.1 | 13.8 | 0.52 |
| 7B | | | | 1.08 |
| 7C | | | | 0.28 |
| 7D | | | | 0.45 |
| 7E | | | | 0.45 |
| 7F | | | | 1.08 |

Example 11 - Other Adherent Compositions

Other polymers having excellent adhesion to untreated polypropylene are:

| Ex. | Composition | Method of Preparation |
|---|---|---|
| 11-1 | IDMA/IBA/IBOA/AA (35/30/34.5/0.5) | 1 |
| 11-2 | IBMA/IDMA/IBOA/AA (30/35/35/0.5) | 1 |
| 11-3 | BA/IBOMA/IDMA (25/10/65) | 1 |
| 11-4 | BA/IBOMA/IDMA (20/20/60) | 1 |

| Ex. | Composition | Method of Preparation |
|---|---|---|
| 11-5 | IBOMA/BA/AA (70/24/6) | 1 |
| 11-6 | IBOMA/BA/AA (80/14/6) | 1 |
| 11-7 | IBOMA/BA/AA (44/50/6) | 1 |
| 11-8 | IBOMA/BA/VA/Quat[1] (39/29/29/3) | 1 |
| 11-9 | IBOMA/BA/St/Quat[1] (39/29/29/3) | 1 |
| 11-10 | IBOMA/BA/Quat[1] (58/39/3) | 1 |
| 11-11 | IDA/IBOMA (1:1) | 1 |
| 11-12 | IDA/IBOMA (25/75) | 1 |
| 11-13 | BA/IBOMA/AA (47/47/6) | 1 |
| 11-14 | BA/IBOMA/DCPOEMA (65/25/10) | 1 |
| 11-15 | BA/IBOMA/DCPOEMA (68/30/2) | 1 |
| 11-16 | BA/BMA/IBOMA/DCPOEMA (53/30/15/2) | 1 |
| 11-17 | BA/IBOMA/AA (40/59.5/0.5) | 1 |

1. This is a salt of a quaternary ammonium monomer of U.S. Patent No. 3,678,098, herein incorporated by reference. The polymers made therewith have excellent dyeability as well as adhesion to polypropylene.

The polymers employing DCPOEMA, DCPOEA and the quaternary ammonium (quat) monomers are crosslinkable.

Example 12 TAPE TEST EVALUATION OF PAINT ADHESION TO POLYPROPYLENE

(Norton 60 mil sheet)

| Example | Tiecoat[1] | Topcoat[2] [3] | Acetate Tape | Acetate X | Teflon Tape | Teflon X |
|---|---|---|---|---|---|---|
| 12A | - | True Value | F*[4] | F* | F* | F* |
| 12B | IDMA/IBOA(1:1)[5] | True Value | SF | SF | USF[8] | USF |
| 12C | IDMA/IBOA/AA[5] (49.75/49.75/0.5) | True Value | P | USF | P | USF |
| 12D | 1:1 Blend of Polymer A[6] and IDMA/IBOA/AA[5] (49.75/49.75/0.5) | True Value | SF | F | P | SF |
| 12E | IBOMA[7] | True Value | SF | F | SF | F |
| 12F | - | J.C. Penney | F* | F* | F* | F* |
| 12G | IDMA/IBOA(1:1) | J.C. Penney | SF | F | F | F |
| 12H | IDMA/IBOA/AA (49.75 /49.75/0.5) | J.C. Penney | USF | SF | USF | SF |
| 12I | 1:1 Blend of Polymer A and IDMA/IBOA/AA (49.75/49.75/0.5) | J.C. Penney | SF | SF | P | SF |
| 12J | IBOMA | J.C. Penney | SF | F | P | SF |
| 12K | - | Sherwin-Williams | F* | F* | F* | F* |
| 12L | IDMA/IBOA(1:1) | " | SF | SF | USF | USF |
| 12M | IDMA/IBOA/AA (49.75/49.75/0.5) | " | USF | SF | P | USF |
| 12N | 1:1 Blend of Polymer A and IDMA/IBOA/AA (49.75/49.75/0.5) | " | F | F | F | F |
| 12O | IBOMA | " | F | F | F | F |

1. Tiecoat applied with a wire wound rod and dried at 60° for 15 mins. A No. 3 wire wound rod is used to apply

the emulsion tiecoat and a No. 16 wire wound rod to apply the solution tiecoat.

2. Topcoat applied with a No. 16 wire wound rod and dried under ambient conditions for approximately 65 hours before testing.

3. True Value Test E-Z Kare TM Flat Enamel, E-Z101 Brite White, General Paint and Chemical Co., Division of Cotter and Co., Chicago, IL 60614
   J.C. Penney One and Only Interior Latex TM - Low Lustre White 0412-80, New York NY 10019
   Sherwin-Williams Wall and Trim Classic 99 TM - Interior Flat Latex, 1104-99993 - Pure White A27W10, Cleveland, OH 44101

4. F* - very poor adhesion, large area extending beyond that covered by tape is removed with very little effort.

5. Polymer prepared as described in Polymerization Process 2. The emulsion is neutralized with aqueous ammonia to pH 7.5 and thickened with 0.6% Cellosize QP 4400.

6. Polymer A is an emulsion polymer described on page 38 of the application. The blended emulsions are neutralized to pH 7.5 with aqueous ammonia and thickened with 0.6% Cellosize QP 4400.

7. Polymer prepared as described in Polymerization Process 4 (page 36). The bulk polymer is dissolved in toluene and used as a 10% solution.

8. USF means very slight failure.

Example 13 - Comparison with U.S. 3394029

An 80% isobornyl acrylate, 20% styrene copolymer was prepared following the procedure of Example 12 of US3394029. The yield was 68% based on monomers. The polymer recovery after precipitation in methanol was 82% for an overall yield of 56% (Ref. Ex. 12).

An 80% isobornyl acrylate, 20% vinylidiene chloride copolymer was prepared following the procedure of Example 13 of US 3394029 (Ref. Ex.13).

Polymerization Process 1 above was used to make an 80% isobornyl acrylate, 20% styrene copolymer; the product was obtained, at 34.6% solids in 97.3% yield. The same process was used to make an 80% isobornyl acrylate and 20% vinylidiene chloride copolymer and resulted in a product, at 34.6% solids, in 96.8% yield.

Polymerization Process 2 above was used to prepare an 80% isobornyl acrylate, 20% styrene copolymer; the product was,at 46.5% solids, in 93.1% yield. The polymers were tested in the 180$^{O}$ adhesion peel strength test given above employing the coating technique in which the polymer, as applied, is oven dried before being coated with a topcoat, except as noted, with the following results:

180° Peel Strength Tests (at 50 cm/min and 20°C above polymer Tg)

| Polymer Tested[e] | | Temp | Test Data | | | |
|---|---|---|---|---|---|---|
| Preparation | Composition | °C | Topcoat[f] | $Kgm^{-1}$ | lbs/in | Failure |
| Process 1 | 801BOA/20St | 116 | Polymer A | 2.67 | 0.15 | tie-top[c] |
| Process 2 | 801BOA/20St | 116 | Polymer A | 1.78 | 0.10 | tie-top |
| Ref. Ex. 12 | 801BOA/20St | 116 | Polymer A | 0.89 | 0.05 | tie-top |
| Process 1 | 801BOA/20VCl$_2$ | 84 | Polymer A | 2.67 | 0.15 | tie-top |
| Ref. Ex.13 | 801BOA/20VCl$_2$ | 84 | Polymer A | 1.78 | 0.10 | tie-top |
| Process 1 | 801BOA/20St | 116 | terpolymer[a] | 3.57 | 0.2 | at pp[d] |
| Process 2 | 801BOA/20St | 116 | terpolymer[a] | 26.8 | 1.5 | at pp |
| Ref. Ex. 12 | 801BOA/20St | 116 | terpolymer | 5.36 | 0.3 | cohes.[b] and tie-top |
| Process 1 | 801BOA/20VCL$_2$ | 84 | terpolymer[a] | 26.8 | 1.5 | at pp and at fabric |
| Ref. Ex. 13 | 801BOA/20VCl$_2$ | 84 | terpolymer | 5.36 | 0.3 | tie-top |

[a] Topcoat applied to wet tiecoat.

[b] Cohesive failures are in tiecoat, topcoat or both.

[c] Tie-top failures are at the tiecoat-topcoat interface.

[d] Failure "at pp" are failures in adhesion to the polypropylene substrate.

[e] The solution polymer tiecoats prepared by the process of Examples 12 and 13 of the reference are applied as 12.5 and 29.6% solutions in xylene; the emulsion polymer tiecoats are applied in the following formulation: 100 parts emulsion as made, 25 parts ethylene glycol monobutyl ether acetate, 25 parts diisobutyl ketone and 15 parts of a 12% aqueous solution of polyvinyl alcohol (Elvanol[R] 71-30 DuPont); viscosity ca. 1000 cps. The acetate and the ketone are volatile coalescing solvents used to promote coalescence of the

latex particles. The topcoats were also thickened with the polyvinyl alcohol before application. The substrate is Norton 60 mil polypropylene sheet.

f Polymer A is a modified poly(ethyl acrylate) latex polymer described in the application on page 38. The terpolymer is a latex polymer having the composition 32 ethyl acrylate /67.5 methyl methacrylate/0.5 acrylic acid.

CLAIMS:

1. A polyolefin substrate, wherein the polyolefin contains at least 85% by weight of units of one or more olefins, having adherent thereto vinyl addition polymer of ethylenically unsaturated monomer compromising at least one primary monomer of the formula:

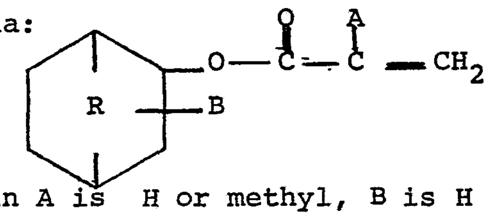

wherein A is H or methyl, B is H or methyl and R is $CH_2$, $>CHCH_3$ or $>C(CH_3)_2$; the polymer having a total surface energy between about 22 and about 42 dynes per cm, said energy having a nonpolar dispersive component between about 20 and about 38 dynes per cm and a polar component up to about 15 dynes per cm, the polar component being not more than 38% of the total surface energy.

2. A substrate as claimed in Claim 1 wherein the vinyl addition polymer is a latex polymer.

3. A substrate as claimed in Claim 1 or 2 wherein said primary monomer comprises less than 20% by weight of the monomers of the polymer.

4. A substrate as claimed in Claim 1,2 or 3 wherein the polymer is of ethylenically unsaturated monomer consisting of said primary monomer and supplementary monomer consisting of monomer(s) having an average solubility parameter, by weight, of 9.2 or less.

5. A substrate as claimed in Claim 1 or 2 wherein the polymer is of ethylenically unsaturated monomer comprising at least 25% by weight of said primary monomer and supplementary monomer consisting of monomer(s) having an average solubility parameter, by weight of 8.8 or less.

6. A substrate as claimed in any preceding claim

wherein the polymer contains crosslinks and/or crosslinkable groups.

7. A substrate as claimed in Claim 6 wherein the polymer is of ethylenically unsaturated monomer comprising said primary monomer and up to 30% by weight of crosslinkable or self-crosslinking monomer.

8. A substrate as claimed in any preceding claim wherein the polymer is of ethylenically unsaturated monomer comprising said primary monomer and up to 20% of carboxyl-containing monomer.

9. A substrate as claimed in any preceding claim wherein said primary monomer comprises isobornyl acrylate and/or isobornyl methacrylate.

10. A substrate as claimed in any preceding claim wherein the polymer is free of halogen atoms.

11. A substrate as claimed in any preceding claim wherein the polymer has an average solubility greater than 0.25 gm per 100 ml in iso octane, n-pentane, 1-hexene, diisobutylene and cyclohexane.

12. A substrate as claimed in any preceding claim wherein the polyolefin is polypropylene.

13. A substrate as claimed in any preceding claim wherein the surface of the polyolefin has not been treated to enhance bonding of the polymer thereto.

14. A substrate as claimed in any preceding claim which also comprises a latex polymer, different from said vinyl addition polymer and in admixture therewith and/or as a coating thereon.

15. An article comprising a substrate according to any of claims 1 to 14.

16. An article as claimed in Claim 15 comprising a non-woven fibrous material, a flocked material or a foamed material.

17. A process for the preparation of a substrate according to any of Claims 1 to 14 which comprises

applying a liquid or foam composition comprising said vinyl addition polymer to the polyolefin substrate and curing and/or drying the composition or allowing it to cure and/or dry.

18. A process as claimed in Claim 17 which comprises the additional step of applying a coating to the vinyl addition polymer.

19. A process as claimed in Claim 17 which comprises the addional steps of applying a fiber floc to the vinyl addition polymer.

0020125

European Patent Office

# EUROPEAN SEARCH REPORT

Application number

EP 80 30 1752

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D | US - A - 3 394 029 (N.C. MAC ARTHUR)<br>* Claims *<br>--<br>US - A - 3 940 353 (R. MARTORANO)<br>* Claims *<br>---- | 1-19<br><br><br>1-19 | C 09 D 3/80<br>C 08 J 7/04<br>B 05 D 7/02 |

TECHNICAL FIELDS SEARCHED (Int.Cl. 3)

C 09 D 3/80
C 08 J 7/04
B 05 D 7/02

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 14.08.1980 | FOUQUIER |